# EUROPÄISCHE PATENTSCHRIFT

(11) **EP 3 392 505 B1**
(45) Veröffentlichungstag und Bekanntmachung des Hinweises auf die Patenterteilung: **26.06.2019**
(21) Anmeldenummer: 18164780.1
(22) Anmeldetag: 28.03.2018
(51) Int. Cl.: F04B 39/06, F04B 1/20

(54) **MISCHVENTILANORDNUNG FÜR EIN HYDRAULISCHES SYSTEM, SOWIE ÖLKÜHLSYSTEM UND KOMPRESSORANLAGE MIT DIESER**
MIXING VALVE DEVICE FOR A HYDRAULIC SYSTEM, AND OIL COOLING SYSTEM AND A COMPRESSOR SYSTEM WITH SAME
DISPOSITIF MITIGEUR POUR UN SYSTÈME HYDRAULIQUE AINSI QUE SYSTÈME DE REFROIDISSEMENT À HUILE ET INSTALLATION DE COMPRESSEUR POURVU D'UN TEL DISPOSITIF MITIGEUR

(30) Priorität: 18.04.2017 DE 102017108186
(43) Veröffentlichungstag der Anmeldung: 24.10.2018
(73) Patentinhaber: Gardner Denver Deutschland GmbH, 97616 Bad Neustadt (DE)
(72) Erfinder: HENN, Nicolas, 56843 Lötzbeure56843 Lötzbeuren (DE); KLAUS, Frank Georg, 56856 Zell-Barl (DE); THOMES, Ulrich, 55471 Külz (DE)
(74) Vertreter: Engel, Christoph Klaus

(56) Entgegenhaltungen:
- EP-A2- 2 526 297
- DE-A1- 10 058 441
- DE-A1-102013 019 074
- US-A1- 2014 338 769

## Beschreibung

Die Erfindung betrifft eine Mischventilanordnung für ein hydraulisches System. Die Mischventilanordnung umfasst einen Mischzylinder, einen Mischkolben und einen Antrieb, der den Mischkolben relativ zum Mischzylinder axial verschiebt, um aus Einlasskammern unterschiedlich viel Medium in den Mischzylinder einströmen zu lassen. Die Erfindung betrifft auch ein Ölkühlsystem mit einer derartigen Mischventilanordnung sowie eine Kompressoranlage, die mit einem solchen Kühlsystem ausgerüstet ist.

Mischventilanordnungen werden in verschiedensten technischen Anwendungen benötigt, wenn verschiedene Medien oder gleichartige Medien mit unterschiedlichen Eigenschaften in größeren Volumina gemischt werden müssen. Ein typischer Anwendungsfall ist die Mischung flüssiger Medien, insbesondere Wasser, Öl oder anderer Hydraulikflüssigkeiten, um eine vorbestimmte Ausgangstemperatur des Mediums bereit zu stellen, wobei dafür eine Medienkomponente höherer Temperatur mit einer Medienkomponente niedriger Temperatur vermischt werden. Die Mischventilanordnung reguliert somit über die Strömungsmengen der beiden Medienkomponenten die Temperatur des abzugebenden gemischten Mediums.

In der EP 2 484 911 A2 ist eine Anordnung zur Steuerung der Betriebstemperatur an einem öleingespritzten Druckluft-Kompressor bekannt, die ein temperaturgesteuertes Mischventil zur Bereitstellung von Öl mit einer gewünschten Temperatur umfasst. Das Ventil besitzt ein größenveränderliches Steuerelement.

Die DE 10 2006 024 069 A1 beschreibt ein Drucksteuerventil für hydraulische Systeme, insbesondere automatische Fahrzeuggetriebe. Das Drucksteuerventil besitzt ein Ventilgehäuse, in das ein Zulauf, ein Ablauf und ein Steuerkanal münden. Zum Verbinden bzw. Trennen des Zulaufs oder des Ablaufs mit dem Steuerkanal ist ein druckausgeglichener Linearschieber im Ventilgehäuse angeordnet, der von einem Schrittmotor angetrieben wird.

Aus der EP 2 526 297 B1 ist ein Verdichtersystem bekannt, welches im Schmierstoffkreislauf ein Ventil verwendet. In einem Ventilgehäuse ist ein Mischraum vorgesehen, in welchem heißer und/oder gekühlter Schmierstoff variabel eingelassen und vermischt werden. Eine innerhalb des Ventilgehäuses angeordnete Manschette ist an einen außerhalb liegenden Aktuator gekoppelt, wobei die Manschette vom Aktuator zwischen einer ersten und einer zweiten Position axial im Gehäuse verschiebbar ist.

Nachteilig an der zuvor genannten Lösung ist, dass der außerhalb des Ventilgehäuses liegende Aktuator über eine Schubstange, welche durch das Gehäuse geführt werden muss, an die Manschette anzukoppeln ist. Üblicherweise herrscht in dem Ventilgehäuse ein erhöhter Druck, sodass an der Durchführungsstelle zwischen Ventilgehäuse und der axial verschiebbaren Schubstange Probleme bei der Abdichtung auftreten. Das Austreten von Schmierstoff an dieser Stelle ist dauerhaft nicht zu vermeiden. Außerdem muss der Aktuator große Kräfte aufbringen, denn er muss zur axialen Verschiebung der Manschette nicht nur die an den Dichtungsstellen auftretenden Reibungskräfte überwinden sondern auch gegen den im Ventilgehäuse herrschenden Druck arbeiten.

Eine Aufgabe der vorliegenden Erfindung besteht ausgehend von diesem Stand der Technik darin, eine verbesserte Mischventilanordnung bereit zu stellen, welche die genannten Nachteile überwindet. Außerdem soll ein verbessertes, insbesondere in einer Kompressoranlage nutzbares Ölkühlsystem bereitgestellt werden.

Diese Aufgaben werden durch eine Mischventilanordnung gemäß dem beigefügten Anspruch 1, ein Ölkühlsystem gemäß dem Anspruch 9 und eine Kompressoranlage gemäß dem Anspruch 10 gelöst. Die abhängigen Ansprüche geben bevorzugte Ausführungsformen an.

Die erfindungsgemäße Mischventilanordnung umfasst zunächst eine Medienkavität, die mit einem vorzugsweise flüssigen Medium befüllt werden kann. In der Medienkavität ist ein Mischzylinder geformt, sowie mindestens eine erste und eine zweite Einlassklammer und ein Auslass. Die Einlasskammern sind axial versetzt zueinander angeordnet und jeweils an einen zugeordneten Medienzuführkanal angeschlossen. Die Einlasskammern münden in den Medienzylinder bzw. gehen in diesen über. Über die Medienzuführkanäle werden mindestens zwei zu mischende Flüssigkeitskomponenten zugeführt. Die Mischventilanordnung umfasst weiterhin einen Mischkolben, der im Mischzylinder axial verschiebbar gelagert ist. Der Mischkolben besitzt mindestens einen Strömungspfad mit mindestens einer Eintrittsöffnung, die vorzugsweise an der Umfangsseite des Mischkolbens angeordnet ist, und mit mindestens einer Austrittsöffnung, die vorzugsweise axial an einer Stirnseite des Mischkolbens positioniert ist.

In Abhängigkeit von der Axialstellung des Mischkolbens mündet die Einlassöffnung mit einem veränderlichen Querschnitt in die erste und/oder die zweite Einlasskammer, sodass abhängig von der Axialstellung ein veränderlicher Querschnitt für das Einströmen des Mediums über die erste und/oder die zweite Einlasskammer zur Verfügung stehen. Damit ändert sich der jeweilige Volumenstrom der Medienkomponenten, die in der Mischkammer miteinander vermischt werden. Die Austrittsöffnung mündet in den Auslass des Mischzylinders, sodass dort das gemischte Medium abgegeben wird. Je nach axialer Verschiebemöglichkeit des Mischkolbens sowie der aufeinander abgestimmten Position der Einlasskammern und der Einlassöffnung im Mischkolben, können unterschiedlichste Betriebszustände eingestellt werden. Üblicherweise ist es durch unterschiedliche Axialstellungen des Mischkolbens ermöglicht, dass entweder nur die erste Medienkomponente über die erste Medienkammer einströmt, nur die zweite Medienkomponente über die zweite Medienkammer oder gleichzeitig, in variablen Mengen beide Komponenten einströmen und vermischt am Auslass abgegeben werden. In bestimmten Anwendungsfällen kann das Mischventil auch komplett zugeriegelt werden, sodass keine der beiden Komponenten durchströmen kann.

Die Mischventilanordnung umfasst weiterhin eine Schubstange, die axial verschiebbar gelagert und antriebswirksam mit dem Mischkolben verbunden ist, um dessen Axialstellung relativ zum Mischzylinder zu verändern. Ebenso ist ein Antrieb vorgesehen, der antriebswirksam mit der Schubstange gekoppelt ist, um diese und mit ihr den Mischkolben axial zu verschieben. Durch die axiale Verschiebung des Mischkolbens innerhalb des Mischzylinders werden die oben beschriebenen Positionen eingenommen, die zu einer jeweils im Volumen unterschiedlich starken Zufuhr der Medienkomponenten führen.

Erfindungsgemäß ist der Antrieb der Mischventilanordnung ein Elektromotor, der vollständig innerhalb der Medienkavität angeordnet ist.

Ein wesentlicher Vorteil der vorliegenden Erfindung besteht darin, dass keine bewegten Teile mehr aus der Medienkavität herausgeführt sind, sodass Leckagen ausgeschlossen sind. Der Elektromotor befindet sich somit vollständig im Medium, welches durch die Kavität strömt. Nach außen müssen nur noch die Versorgungs- oder Steuerleitungen für den Motor geführt werden, die aber unbeweglich sind und deren Durchführstellen daher leicht abgedichtet werden können. Weiterhin ist vorteilhaft, dass der Motor und die von diesem angetriebene Schubstange allseits mit demselben Druck beaufschlagt sind, der in der Medienkavität herrscht. Für eine axiale Verschiebung der Schubstange und des daran angekoppelten Mischkolbens müssen daher keine statischen Druckunterschiede überwunden werden, sodass kleine Antriebskräfte genügen.

Gemäß einer abgewandelten Ausführungsform kann der Mischzylinder mehr als zwei Einlasskammern aufweisen, sodass auch entsprechend mehrere Medienkomponenten zugeführt und gemischt werden können. Bei einer bevorzugten Ausführungsform sind die Einlasskammern als ringförmige Querschnittserweiterungen des Mischzylinders ausgebildet. Diese Querschnittserweiterungen können in zueinander parallelen, axial beabstandeten Querschnittsebenen des Mischzylinders liegen und sich entweder über den gesamten Umfang oder nur einen kleineren Abschnitt erstrecken.

Bevorzugt ist der Mischkolben als eine zylindrische Hülse geformt, welche mehrere am Umfang verteilte schlitzförmige Einlassöffnungen besitzt. Ist die entsprechende Axialstellung des Mischkolbens gewählt, liegen die Einlassöffnungen dann den Einlasskammern gegenüber, sodass das Medium von der Einlasskammer in das Innere der Hülse einströmen kann, oder die Einlassöffnungen stehen axial versetzt zu den Einlasskammern, sodass kein Medium einströmen kann. Zwischenpositionen mit nur teilweise in die jeweilige Kammer geöffneter Einlassöffnung sind zur Volumenstromsteuerung möglich.

Gemäß einer bevorzugten Ausführungsform ist der Elektromotor ein Schrittmotor mit axial verschiebbarer Antriebsstange, welche and die Schubstange gekoppelt oder integral mit dieser ausgebildet ist. Im einfachsten Fall bildet also die aus dem Schrittmotor axial herausfahrbare Antriebsstange die Schubstange und ist direkt an den Mischkolben gekoppelt.

Eine besondere Ausführungsform zeichnet sich dadurch aus, dass der Elektromotor vollständig druckoffen in der Medienkavität angeordnet ist, sodass entlang seiner axialen Erstreckung unabhängig von der Axialstellung des Mischkolbens keine Druckunterschiede auftreten. Der Elektromotor kann dazu vollständig oder abschnittsweise im Mischzylinder selbst sitzen.

Bei einer Ausführungsform ist die Medienkavität im Bereich einer Stirnseite des Mischzylinders, nämlich an seinem dem Auslass axial gegenüberliegenden Ende, mit einer Verschlussplatte verschlossen. Vorzugsweise trägt die Verschlussplatte den Elektromotor. Die Verschlussplatte kann gegenüber dem Gehäuse, welches die Medienkavität umgibt, beispielsweise mit einer üblichen Dichtung abgedichtet sein. Vorteilhaft ist es dabei, wenn ein Druckausgleichskanal vom Mischzylinder in die Verschlussplatte verläuft, um einen Druckausgleich zwischen den beiden axialen Enden des Gehäuses des Elektromotors herzustellen.

Gemäß einer bevorzugten Ausführung ist die Mischventilanordnung zur Temperaturregelung in einem Ölkreislauf konfiguriert, wobei über die erste Einlasskammer Öl mit einer ersten Temperatur und über die zweite Einlasskammer Öl mit einer zweiten Temperatur zuführbar ist. Die Mischanordnung ist dabei vorzugsweise in ihren Abmessungen so gestaltet, dass sie bisher übliche Thermostatventile ohne weitere baulich Änderungen ersetzen kann.

Für die Ansteuerung des Motors wird ein Signal von einer externen Steuereinheit geliefert, in Abhängigkeit von dem gewünschten Mischungsverhältnis der Medienkomponenten. Wenn die Mischung temperaturabhängig erfolgen soll, sind Temperatursensoren erforderlich, welche insbesondere die Temperatur des gemischten Mediums am Auslass des Mischzylinders und bei Bedarf auch die Temperaturen der Medienkomponenten an den Einlasskammern erfassen und der Steuereinheit bereitstellen. Gemäß einer bevorzugten Ausführungsform ist mindestens ein Temperatursensor in die Mischventilanordnung integriert.

Das ebenfalls durch die Erfindung bereitgestellte Ölkühlsystem besitzt einen geschlossenen Ölkreislauf mit einem Kühler zur Abkühlung des kreislaufgeführten Öls, mit einer Wärmequelle, der das gekühlte Öl mit einer vorbestimmten Eingangstemperatur zugeführt wird, und mit einer Temperaturregeleinheit zur Einstellung der vorbestimmten Eingangstemperatur. Die Temperaturregeleinheit umfasst eine Mischventilanordnung einer der zuvor beschriebenen Ausführungsformen bzw. deren Kombinationen. Schließlich liefert die Erfindung eine Kompressoranlage mit einer öleingespritzten Verdichtereinheit zur Erzeugung von Druckluft und mit einem solchen Ölkühlsystem.

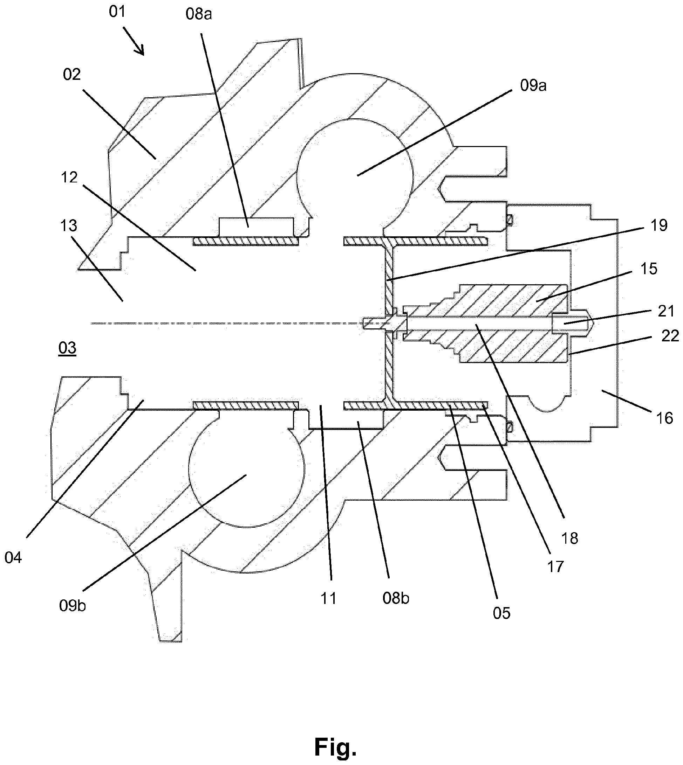

Weitere Vorteile und Einzelheiten der Erfindung ergeben sich aus der nachfolgenden Beschreibung einer bevorzugten Ausführungsform unter Bezugnahme auf die Zeichnung.

Die einzige Figur zeigt eine Schnittansicht eines Abschnitts einer erfindungsgemäßen Mischventilanordnung 01. Die Mischventilanordnung 01 besitzt ein Gehäuse 02, welches integraler Bestandteil eines hydraulischen Systems, beispielsweise eines Ölkühlsystems sein kann. Innerhalb des Gehäuses 02 ist eine Medienkavität 03 ausgebildet, in welcher im Betrieb ein Medium strömt. Einen Abschnitt der Medienkavität 03 bildet ein Mischzylinder 04 in welchem ein Mischkolben 05 in axialer Richtung verschiebbar angeordnet ist. Eine Schraubenfeder 07 wirkt in axialer Richtung auf den Mischkolben 05 ein und drängt diesen in eine Nulllage.

Der Mischzylinder 04 grenzt mit Abschnitten seiner Wandung an eine erste Einlasskammer 08a und eine zweite Einlasskammer 08b. Die Einlasskammern 08 erstrecken sich als Ringabschnitte um den Mischzylinder 04 herum und sind in diesen geöffnet, sofern diese Öffnung nicht durch die Wandung des Mischkolbens 05 verschlossen wird. Die Einlasskammern stehen mit jeweils einem Medienzuführkanal 09a, 09b in Verbindung, über welche die zu vermischenden Medienkomponenten zugeführt werden. Der Mischzylinder 04 besitzt in seiner Wandung mehrere Eintrittsöffnungen 11, die als am Umfang verlaufende Schlitze ausgebildet sind. Sind durch geeignete axiale Positionierung des Mischkolbens die Eintrittsöffnungen 11 jedenfalls teilweise deckungsgleich mit den Einlasskammern 08, dann strömt die jeweilige Medienkomponente in das Innere des Medienkolbens ein. Der Strömungspfad verläuft dann durch eine an der Stirnseite des Mischkolbens 05 liegende Austrittsöffnung 12 zu einem Auslass 13 des Mischzylinders 04.

Die Mischventilanordnung umfasst weiterhin einen Elektromotor 15, der bevorzugt ein Schrittmotor ist und als Verstellantrieb für den Mischkolben 05 arbeitet. Der Elektromotor 15 ist an einer Verschlussplatte 16 befestigt, welche die Medienkavität 03 am Ende des Mischzylinders 04 dicht verschließt. Der Motor ist auf diese Weise vollständig innerhalb der Medienkavität angeordnet, was bedeutet, dass allseits dieselben Druckverhältnisse herrschen.

Bei der dargestellten Ausführungsform ragt der von der Verschlussplatte 16 abgewandte Abschnitt des Elektromotors 15 teilweise in einen Aufnahmeabschnitt 17 des Mischkolbens 05 hinein. Antriebswirksam ist der Elektromotor 15 über eine axial verschiebbare Antriebsstange 18 mit dem Mischkolben 05 verbunden. Die Antriebsstange 18 wirkt als Schubstange und bewirkt bei Aktivierung des Elektromotors eine axiale Verschiebung des Mischkolbens 05 im Mischzylinder 04. Am kolbenseitigen Ende ist die Antriebsstange 18 beispielsweise an einer Zwischenplatte 19 des Mischkolbens 05 angebracht. Die Zwischenplatte besitzt vorzugsweise Durchbrüche (nicht gezeigt), sodass auf beiden Seiten der Zwischenplatte 19 dieselben Druckverhältnisse herrschen. Auf der axial gegenüberliegenden Seite ist die Antriebsstange 18 mit einem Druckende 21 aus dem Motorgehäuse herausgeführt, sodass sich das Druckende 21 in der Medienkavität 03 befindet und demselben Druck wie der Mischkolben 05 ausgesetzt ist. Soweit für die Herstellung einer druckoffenen Verbindung nicht bereits andere konstruktive Maßnahmen genügen, ist ein gesonderter Druckausgleichskanal 22 vorgesehen, der den Mischzylinder 04 mit der Rückseite des Elektromotors und dem dort offen liegenden Druckende 21 der Antriebsstange 18 verbindet.

### Bezugszeichenliste

- 01: Mischventilanordnung
- 02: Gehäuse
- 03: Medienkavität
- 04: Mischzylinder
- 05: Mischkolben
- 06: -
- 07: Schraubenfeder
- 08: Einlasskammern
- 09: Medienzuführkanäle
- 10: -
- 11: Eintrittsöffnung
- 12: Austrittsöffnung
- 13: Auslass
- 14: -
- 15: Elektromotor
- 16: Verschlussplatte
- 17: Aufnahmeabschnitt
- 18: Antriebsstange / Schubstange
- 19: Zwischenplatte
- 20: -
- 21: Druckende
- 22: Druckausgleichskanal

## Patentansprüche

1. Mischventilanordnung (01) für ein hydraulisches System mit:
- einer Medienkavität (03), in welcher ein Mischzylinder (04), mindestens eine erste und eine zweite Einlasskammer (08) sowie einen Auslass (13) ausgebildet sind, wobei die Einlasskammern (08) axial versetzt zueinander angeordnet und jeweils an einen zugeordneten Medienzuführkanal (09) angeschlossen sind sowie in den Mischzylinder (04) münden, wobei über die Medienzuführkanäle (09) mindestens zwei zu mischende Medienkomponenten zuführbar sind;
- einem Mischkolben (05), der im Mischzylinder (04) axial verschiebbar gelagert ist und mindestens einen Strömungspfad aufweist mit mindestens einer Eintrittsöffnung (11), die in Abhängigkeit von der Axialstellung des Mischkolbens (05) mit einem veränderlichen Querschnitt in die erste und/oder die zweite Einlasskammer (08) mündet, und mit einer Austrittsöffnung (12), die in den Auslass (13) des Mischzylinders (04) mündet;
- einer Schubstange (18), die axial verschiebbar gelagert und mit dem Mischkolben (05) verbunden ist, um dessen Axialstellung zu verändern;
- einem Antrieb, der antriebswirksam mit der Schubstange (18) gekoppelt ist, um diese axial zu verschieben;
**dadurch gekennzeichnet, dass** der Antrieb ein Elektromotor (15) ist, der vollständig innerhalb der Medienkavität (03) angeordnet ist.

2. Mischventilanordnung (01) nach Anspruch 1, **dadurch gekennzeichnet, dass** der Elektromotor (15) ein Schrittmotor mit axial verschiebbarer Antriebsstange (18) ist, welche an die Schubstange gekoppelt oder integral mit dieser ausgebildet ist.

3. Mischventilanordnung (01) nach Anspruch 1 oder 2, **dadurch gekennzeichnet, dass** der Elektromotor (15) druckoffen in der Mischkavität (03) angeordnet ist, sodass entlang seiner axialen Erstreckung unabhängig von der Axialstellung des Mischkolbens (05) keine Druckunterschiede auftreten.

4. Mischventilanordnung (01) nach einem der Ansprüche 1 bis 3, **dadurch gekennzeichnet, dass** die Einlasskammern (08) als ringförmige Querschnittserweiterungen des Mischzylinders (04) ausgebildet sind.

5. Mischventilanordnung (01) nach einem der Ansprüchel bis 4, **dadurch gekennzeichnet, dass** der Mischkolben (05) als eine zylindrische Hülse geformt ist, welche mehrere am Umfang verteilte schlitzförmige Eintrittsöffnungen (11) besitzt.

6. Mischventilanordnung (01) nach einem der Ansprüche 1 bis 5, **dadurch gekennzeichnet, dass** der Mischzylinder (05) an seinem dem Auslass (13) axial gegenüberliegendem Ende mit einer Verschlussplatte (16) verschlossen ist, wobei die Verschlussplatte den Elektromotor (15) trägt.

7. Mischventilanordnung nach Anspruch 6, **dadurch gekennzeichnet, dass** ein Druckausgleichskanal (22) vom Mischzylinder (04) in die Verschlussplatte (16) verläuft, um einen allseitigen Druckausgleich am Elektromotor (15) herzustellen.

8. Mischventilanordnung (01) nach einem der Ansprüche 1 bis 7, **dadurch gekennzeichnet, dass** sie zur Temperaturregelung in einem Ölkreislauf konfiguriert ist, wobei über die erste Einlasskammer (08a) Öl mit einer ersten Temperatur und über die zweite Einlasskammer (08b) Öl mit einer zweiten Temperatur zuführbar ist, und wobei ein Temperatursensor vorgesehen ist, der die Temperatur des Mediums mindestens am Auslass (13) des Mischzylinders (04) erfasst.

9. Ölkühlsystem mit einem geschlossenen Ölkreislauf, einem Kühler zur Abkühlung des kreislaufgeführten Öls, mit einer Wärmequelle, der das gekühlte Öl mit einer vorbestimmten Eingangstemperatur zugeführt wird, und mit einer Temperaturregeleinheit zur Einstellung der vorbestimmten Eingangstemperatur, **dadurch gekennzeichnet, dass** die Temperaturregeleinheit eine Mischventilanordnung (01) gemäß einem der Ansprüche 1 bis 8 umfasst.

10. Kompressoranlage mit einer öleingespritzten Verdichtereinheit zur Erzeugung von Druckluft und mit einem Ölkühlsystem gemäß Anspruch 9.

## Claims

1. A mixing valve arrangement (01) for a hydraulic system with:
- a media cavity (03), in which a mixing cylinder (04), at least a first and a second inlet chamber (08) and an outlet (13) are formed, wherein the inlet chambers (08) are arranged axially displaced with respect to one another and are in each case connected to an assigned media feed channel (09) and emerge into the mixing cylinder (04), wherein at least two media components to be mixed can be fed via the media feed channels (09) ;
- a mixing plunger (05), which is mounted axially displaceable in the mixing cylinder (04) and comprises at least one flow path with at least one inlet opening (11) which, depending on the axial position of the mixing plunger (05), emerges with a variable cross-section into the first and/or the second inlet chamber (08), and with an outlet opening (12), which emerges into the outlet (13) of the mixing cylinder (04);
- a push rod (18), which is mounted axially displaceable and is connected to the mixing plunger (05) in order to change its axial position;
- a drive, which is coupled with a driving action to the push rod (18) in order to displace the latter axially;
**characterised in that** the drive is an electric motor (15), which is arranged completely inside the media cavity (03).

2. The mixing valve arrangement (01) according to claim 1, **characterised in that** the electric motor (15) is a stepping motor with an axially displaceable drive rod (18), which is coupled to the push rod or is formed integral with the latter.

3. The mixing valve arrangement (01) according to claim 1 or 2, **characterised in that** the electric motor (15) is arranged open in terms of pressure inside the mixing cavity (03), so that no pressure differences occur along its axial extension irrespective of the axial position of the mixing plunger (05).

4. The mixing valve arrangement (01) according to any one of claims 1 to 3, **characterised in that** the inlet chambers (08) are formed as annular cross-sectional extensions of the mixing cylinder (04).

5. The mixing valve arrangement (01) according to any one of claims 1 to 4, **characterised in that** the mixing plunger (05) is formed as a cylindrical sleeve, which comprises a plurality of slit-shaped inlet openings (11) distributed at the circumference.

6. The mixing valve arrangement (01) according to any one of claims 1 to 5, **characterised in that** the mixing cylinder (05) is connected at its end lying axially opposite the outlet (13) to a closure plate (16), wherein the closure plate carries the electric motor (15) .

7. The mixing valve arrangement according to claim 6, **characterised in that** a pressure compensation channel (22) runs from the mixing cylinder (04) into the closure plate (16), in order to create an all-round pressure compensation on the electric motor (15).

8. The mixing valve arrangement (01) according to any one of claims 1 to 7, **characterised in that** it is configured for temperature control in an oil circuit, wherein oil can be fed at a first temperature via the first inlet chamber (08a) and oil at a second temperature via the second inlet chamber (08b), and wherein a temperature sensor is provided, which detects the temperature of the medium at least at the outlet (13) of the mixing cylinder (04).

9. An oil cooling system with a closed oil circuit, a cooler for cooling the oil conveyed in the circuit, with a heat source, to which the cooled oil is fed at a predetermined input temperature, and with a temperature control unit for adjusting the predetermined input temperature, **characterised in that** the temperature control unit comprises a mixing valve arrangement (01) according to any one of claims 1 to 8.

10. A compressor plant with an oil-injected compressor unit for generating compressed air and with an oil cooling system according to claim 9.

## Revendications

1. Dispositif de vanne mélangeuse (01) destiné à un système hydraulique, comprenant :
- une cavité à fluide (03), dans laquelle est conçu un cylindre mélangeur (04), au moins une première et une deuxième chambre d'admission (08) ainsi qu'une sortie (13), les chambres d'admission (08) étant mutuellement déportées en direction axiale et raccordées chacune sur un canal d'alimentation de fluide (09) associé et débouchant dans le cylindre mélangeur (04), par l'intermédiaire des canaux d'alimentation de fluide (09) étant susceptibles d'être alimentés au moins deux composants de fluide qui doivent être mélangés ;
- un piston mélangeur (05), qui est logé en étant déplaçable en direction axiale dans le cylindre mélangeur (04) et qui comporte au moins un trajet d'écoulement pourvu d'au moins un orifice d'entrée (11), qui en fonction de la position axiale du piston mélangeur (05) débouche avec une section transversale variable dans la première et/ou la deuxième chambre d'admission (08), et pourvu d'un orifice de sortie (12), qui débouche dans la sortie (13) du cylindre mélangeur (04) ;
- une bielle (18), qui est logée en étant déplaçable en direction axiale et qui est reliée avec le piston mélangeur (05), pour faire varier la position axiale de celui-ci ;
- un entraînement, qui est accouplé en entraînement actif avec la bielle (18), pour déplacer celle-ci en direction axiale ;
**caractérisé en ce que** l'entraînement est un moteur électrique (15) qui est entièrement placé à l'intérieur de la cavité à fluide (03).

2. Dispositif de vanne mélangeuse (01) selon la revendication 1, **caractérisé en ce que** le moteur électrique (15) est un moteur pas à pas pourvu d'une tige d'entraînement (18) déplaçable en direction axiale, lequel est accouplé sur la bielle ou intégralement formé avec celle-ci.

3. Dispositif de vanne mélangeuse (01) selon la revendication 1 ou 2, **caractérisé en ce que** le moteur électrique (15) est placé de manière ouverte à la pression dans la cavité mélangeuse (03), de sorte que le long de son extension axiale, indépendamment de la position axiale du piston mélangeur (05), il ne se produise aucune pression différentielle.

4. Dispositif de vanne mélangeuse (01) selon l'une quelconque des revendications 1 à 3, **caractérisé en ce que** les chambres d'admission (08) sont conçues sous la forme d'élargissements de forme annulaire de la section transversale du cylindre mélangeur (04).

5. Dispositif de vanne mélangeuse (01) selon l'une quelconque des revendications 1 à 4, **caractérisé en ce que** le piston mélangeur (05) est façonné sous la forme d'une douille cylindrique, laquelle comporte plusieurs orifices d'entrée (11) en forme de fentes, distribués sur la périphérie.

6. Dispositif de vanne mélangeuse (01) selon l'une quelconque des revendications 1 à 5, **caractérisé en ce que** sur son extrémité opposée en direction axiale à la sortie (13), le cylindre mélangeur (05) est fermé par une plaque de fermeture (16), la plaque de fermeture portant le moteur électrique (15).

7. Dispositif de vanne mélangeuse selon la revendication 6, **caractérisé en ce qu'**un canal compensateur de pression (22) s'écoule du cylindre mélangeur (04) dans la plaque de fermeture (16), pour créer une compensation de pression de toutes parts sur le moteur électrique (15).

8. Dispositif de vanne mélangeuse (01) selon l'une quelconque des revendications 1 à 7, **caractérisé en ce qu'**il est configuré pour une régulation thermique dans un circuit d'huile, par l'intermédiaire de la première chambre d'admission (08a), de l'huile étant susceptible d'être alimentée à une première température et par l'intermédiaire de la deuxième chambre d'admission (08b), de l'huile étant susceptible d'être alimentée à une deuxième température et un capteur de température étant prévu, qui détecte la température du fluide au moins sur la sortie (13) du cylindre mélangeur (04).

9. Système de refroidissement par huile, pourvu d'un circuit d'huile fermé, d'un radiateur destiné à refroidir l'huile guidée dans le circuit, d'une source thermique, vers laquelle l'huile refroidie est alimentée à une température d'entrée prédéfinie et pourvu d'un ensemble régulateur de température, destiné à régler la température d'entrée prédéfinie, **caractérisé en ce que** l'ensemble régulateur de température comprend un dispositif de vanne mélangeuse (01) selon l'une quelconque des revendications 1 à 8.

10. Groupe compresseur, pourvu d'une unité de compression à injection d'huile, destiné à crée de l'air comprimé et pourvu d'un système de refroidissement par huile selon la revendication 9.
